# EUROPEAN PATENT SPECIFICATION

(11) **EP 0 921 965 B1**
(45) Date of publication and mention of the grant of the patent: **04.04.2007**
(21) Application number: 97936914.7
(22) Date of filing: 28.08.1997
(51) Int. Cl.: B60R 16/02

(54) **ARRANGEMENT FOR RESPONDING TO SIGNALS FROM A NUMBER OF SENSORS AND CONTROLLING A NUMBER OF OPERATING DEVICES IN A VEHICLE, AND CONTROL UNIT**
ANORDNUNG ZUM AGIEREN AUF EINE ANZAHL VON SENSORSIGNALEN UND ZUR STEUERUNG EINER ANZAHL VON KRAFTFAHRZEUG-BETÄTIGUNGS-VORRICHTUNGEN, UND STEUERGERÄT
SYSTEME PERMETTANT DE REPONDRE A DES SIGNAUX PRODUITS PAR UN CERTAIN NOMBRE DE CAPTEURS ET DE COMMANDER UN CERTAIN NOMBRE DE DISPOSITIFS DE FONCTIONNEMENT DANS UN VEHICULE, ET UNITE DE COMMANDE

(30) Priority: 30.08.1996 SE 9603180
(43) Date of publication of application: 16.06.1999
(73) Proprietor: Scania CV Aktiebolag (publ), 151 87 Södertälje (SE)
(72) Inventor: LYBERGER, Rickard, S-155 31 Nykvarn (SE); CROMNOW, Christer, S-641 47 Katrineholm (SE)
(74) Representative: Waldebäck, Hans Olov
(86) International application number: PCT/SE1997/001427
(87) International publication number: WO 1998/008712

(56) References cited:
- EP-A- 0 138 710
- WO-A-93/21035
- US-A- 3 544 803
- US-A- 3 864 578
- US-A- 4 293 947
- US-A- 5 521 588

## Description

### Background to the invention and state of the art

The present invention relates to an arrangement in accordance with the preamble to patent claim 1 and a control unit in accordance with the preamble to patent claim 8.

Conventional electrical systems for vehicles incorporate a large number of electrical conductors running between various vehicle components, i.e. in principle a separate electrical conductor for, to a large extent, each signal or electrical voltage to be transmitted between two vehicle components. This means extensive cable laying with large bunches of cables extending in various directions in the vehicle. Moreover, vehicle models with different equipment variants require different cable laying, which leads to higher production costs. The growing amount of electrical extra equipment in modern vehicles has therefore resulted in exacerbation of this problem when using conventional cable laying.

This problem is addressed by using electronic control systems, so-called multiplex systems, based on a common signal line which runs in a single loop in the vehicle, and on individual vehicle components being connected to this signal line in the vicinity of their respective positions in the vehicle. These connections are made by means of a control unit or a so-called node which processes incoming sensor signals and supplies outgoing control signals to the components concerned. The fact that a signal line can be used for controlling two or more vehicle components means that the total number of cables can be reduced.

Such modern electrical control systems for motor vehicles do incorporate, however, a large number of different control units or nodes, particularly in more complex and larger vehicles such as buses, which have a great deal of extra equipment, e.g. for controlling the opening and closing of the various doors, for communication between driver and passengers, etc. These control units or nodes are specific to the various functions which they are adapted to controlling. This means that a large number of different types of control units have to be developed and manufactured for different vehicles and for different variants of the same vehicle. It also means that correspondingly large numbers of different control units have to be stocked by each individual workshop in order to be able to meet customer demand for a high level of service.

Examples of various electrical control systems are referred to in the documents quoted below.

US-A-3 544 803 refers to an electrical distribution and control system for motor vehicles, incorporating a power distribution line and a signal distribution line which are arranged parallel with one another. To these lines are connected detector stations and various control and function stations for controlling equivalent vehicle functions such as lamps, windscreen wipers, etc.

US-A-3 864 578 refers to a multiplex system for controlling various vehicle components which incorporates an encoding device which on the basis of the position of a sensor generates a time signal and a code signal, a decoding device arranged at a distance from the encoding device to deliver an output signal in response to said code signal, and a relay device delivering a modulating signal to relevant components which respond to said output signal.

SE-B-458 886 refers to a system for transmitting information between various components of a vehicle. The system incorporates a monitor node and a number of transmission nodes which are connected to a bus for communication between nodes. The purpose of the transmission nodes is to receive information from connected vehicle components, to transmit to one another, via the bus, component information arising from connected vehicle components, and to supply connected vehicle components with component information which they require for them to be able to function.

WO 93/21035 A1 discloses a system which is considered to represent the closest prior art, and which corresponds to the features mentioned in the introductory part of attached claims 1 and 8. It describes an apparatus in a vehicle having a number of identical control units. Each control unit is permanently programmed from the beginning when the vehicle is produced and comprises programmes to carry out all the electrical functions of the vehicle. In this way all units are exchangeable and if one unit in a priority position fail it can be replaced by another unit in the same vehicle having a non-priority position. This enables the vehicle to be driven in a "get you home"-mode. However this disclosure remains silent how to programme a new unit that is to replace a malfunctioning unit in a vehicle having a specific individual programme.

### Summary of the invention

The object of the present invention is to eliminate the aforesaid problem and provide an electrical control system for vehicles which requires relatively few different kinds of articles and leads to simplified manufacture and stockholding. A further object is simplified management of servicing as compared with systems available at present, a particular aim being to be able to replace control units in a very simple and reliable manner.

This object is achieved by the arrangement indicated in the introduction being designed according to the features indicated in the characterising part of patent claim 1. Vehicle manufacture and servicing are thus facilitated because fewer articles need to be manufactured and held in stock. The present invention is thus based on the realisation that it is possible to create a complex and comprehensive electrical vehicle control system composed of a large number of substantially identical control units.

According to the invention, each control unit incorporates a memory device with a programmable memory section in which parameters specific to the vehicle are stored. This means that the information needed for an individual vehicle is stored in each control unit and that when a control unit is replaced this information can be transferred to the new control unit without having to proceed circuitously via externally stored data, e.g. from a diskette. Such vehicle-specific parameters can be used to adapt control units to different variants of the same vehicle, e.g. with different types of extra equipment. According to the invention each control unit may be adapted to make the transmission of said vehicle-specific parameters to another control unit possible, e.g. at the time of fitting a new control unit in the vehicle. This makes it possible for all vehicle-specific parameters to be loaded automatically into all the control units when a new control unit is inserted in an existing arrangement according to the invention.

According to the invention, each control unit incorporates not only a memory device with a number of control programmes which are designed to respond to the various sensors and control the various operating devices, but also a means which is directed to activating the subset of control programmes which is designed to receive sensor signals from the subset of sensors of the relevant control unit and to send control signals to the subset of operating devices of the relevant control unit. Such a means of activation makes it easy to adapt each individual control unit to relevant specific vehicle functions. It also results in only the memory capacity and software of control units having to be overdimensioned as compared with control units being only manufactured to cope with relevant specific vehicle functions. Such memory capacity is now available at very favourable cost. The software has in any case to be produced and the present invention thus results in it only being necessary for it to be copied to a number of control units, an operation involving only negligible further cost. At the same time, said memory devices may incorporate a permanently programmed section in which said number of control programmes are preprogrammed.

According to a further embodiment of the invention, said means of activation is directed to activating said subset of control programmes at the time when the control units are fitted in the vehicle. It is advantageous to carry out adaptation of the control units to relevant specific vehicle functions at that stage. This facilitates manufacture and, above all, the replacement of defective control units. Said means of activation may with advantage incorporate a set-up of code contacts connected in such a way that activation of the relevant control programmes is by connection of a combination of these code contacts. At the same time, each control unit may incorporate a connector which incorporates said set-up of code contacts and which is directed to being connected to a corresponding connector in the vehicle, said connection being effected at the time of the connection of the connectors to one another. This makes adaptation very easy and ensures that it involves no mistakes, since the design of the vehicle's connectors determines which of the functions of the control unit are activated. It is also advantageous for the connectors of each control unit to incorporate a number of connection contacts for signals coming in from sensors and signals going out to operating devices. The connector may thus incorporate all the contacts, and the fitting and adaptation of a control unit may be carried out by simply connecting its connectors.

According to a further embodiment of the invention, the arrangement incorporates a transmission line connecting the control units to one another and directed to transmitting signals between control units. This makes it possible for the control units to form part of a so-called multiplex system by being arranged to enable a sensor signal received by a control unit to be transmitted from that control unit to another in order to control a component connected to the latter.

The object stated above is also achieved by the control unit indicated in the introduction being designed with the features indicated in the characterising part of patent claim 10.

Advantageous embodiments of such a control unit are indicated in dependent claims 11 to 14.

### Brief description of the drawings

The invention will now be explained in more detail on the basis of various embodiments with reference to the attached drawings, which are as follows:
Fig.1 shows a schematic block diagram of an arrangement according to the present invention, and
Fig.2 shows a schematic block diagram of a control unit according to the present invention.

### Detailed description of various embodiments

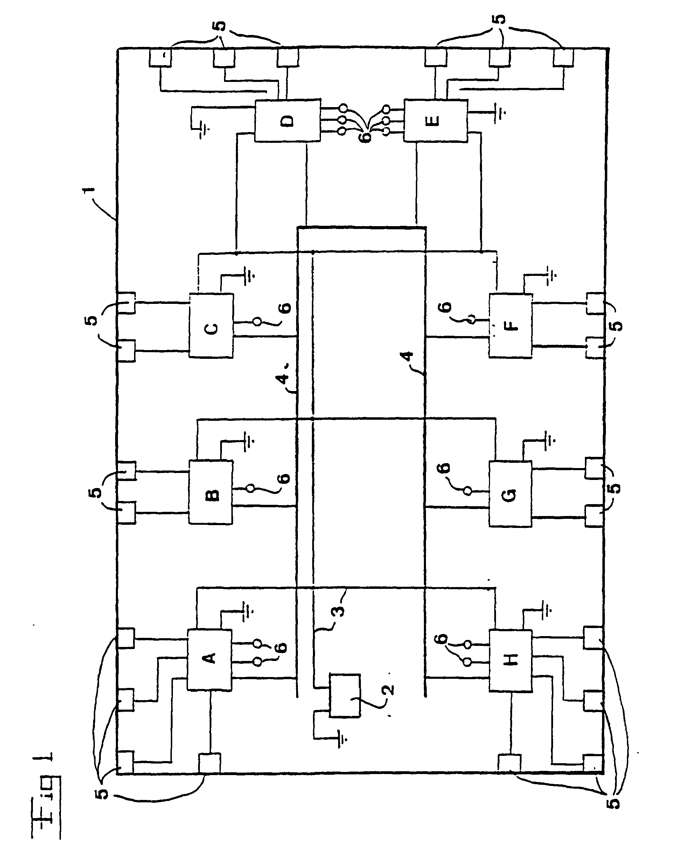

Fig.1 shows an arrangement for controlling various functions of a schematically depicted vehicle 1. In the embodiment here described the vehicle is a bus but the present invention is of course also applicable to other types of vehicle such as trucks, tanker vehicles, passenger cars etc. The arrangement incorporates a schematically depicted electrical system with a power source in the form of a vehicle battery 2 connected via a power line 3 to each of eight control units A-H. The latter are connected to a common transmission line 4 arranged to transmit signals between them. Each control unit A-H is further connected to a number of operating devices 5 and a number of sensors 6. The various operating devices 5 may incorporate all conceivable active and passive functions in a vehicle, which may be activated by electric current directly or via a relay, a servomotor or an actuator, and examples include various lighting devices such as brake lamps, rear lamps, flashers, interior lighting, various warning lamps for the driver, etc. The operating devices 5 may also include analogue and digital indicating devices, windscreen wipers, door openers, horns, etc. The sensors 6 may include every conceivable type of sensor for all the operating devices 5 of the vehicle 1. The sensors 6 may thus include, for example, temperature sensors (e.g. for coolants), brake lamp contacts, various control devices such as flasher controls, lamp switches, photoelectric cells for counting the number of passengers, door opening buttons, etc. It should be noted that all the various types of operating devices 5 referred to are marked in the same manner in Fig. 1, as also all the various types of sensor 6 referred to. In the embodiment depicted in Fig.1, control units D and E are situated in the front part of the vehicle 1 to serve the various sensors 6 and operating devices 5 used by the driver.

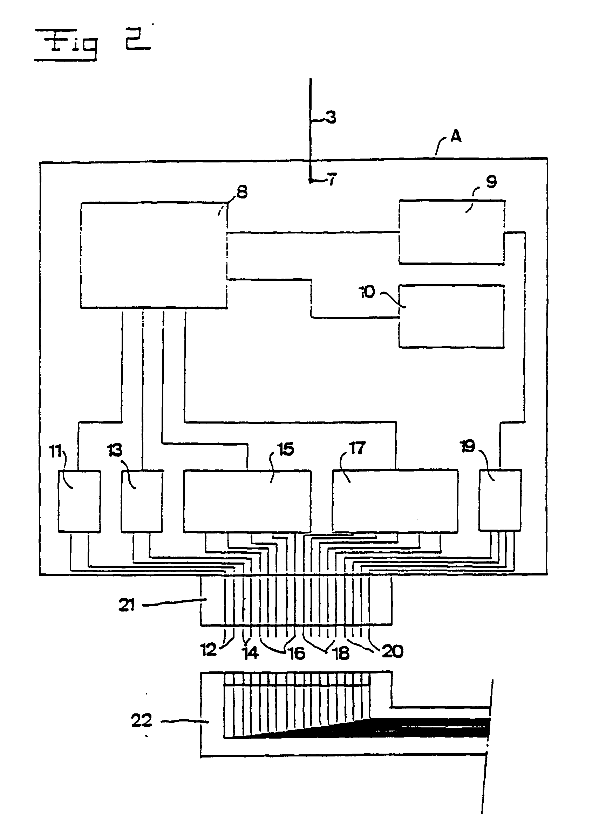

Fig.2 shows schematically the structure of one of the control units A-H depicted in Fig.1 according to the present invention. The control units A-H are substantially identical but for the sake of simplicity the one depicted in Fig.2 is control unit A, which receives electric current from the power line 3 via the schematically depicted input 7. Control unit A incorporates a processing device in the form of a processor 8 which is connected to a memory device with a permanently programmed memory 9 (a so-called read-only or ROM memory) and with a programmable memory 10, preferably a so-called PROM memory. Control unit A further incorporates a series channel device 11 which is connected to the processor 8 and which can be used to connect the control unit to an undepicted external computer via the connection pins 12. The processor is also connected to a communication port 13 which can be used to connect it to the other control units B-H via the connection pins 14. The processor 8 is further connected to an input device 15 with a number of connection pins 16 (e.g. four to twenty) and an output device 17 with a number of connection pins 18 (e.g. four to twenty). The processor 8 is thus connected to the sensors 6 of control unit A via the connection pins 16 and the input device 15 and to the operating devices 5 of control unit A via the connection pins 18 and the output device 17. Control unit A further incorporates an activating or encoding device 19 with four connection pins 20. The connection pins 12, 14, 16, 18 and 20 are contained in a connector 21 which is directed to being connected to a corresponding connector 22 in the vehicle 1. The corresponding connector is connected to the power source 2, to earth, to the transmission line 4, to the various operating devices 5 and to the various sensors 6.

The permanently programmed memory 9 of control units A-H contains a number of preprogrammed control programmes each designed to respond to sensor signals from one of the sensors 6 and to control one or more operating devices 5. In order, for example, to adapt control unit A to the operating devices 5 and sensors 6 which it is intended to serve, the activating or encoding device 19 is designed, when the connectors 21 and 22 are connected to one another during the fitting of control unit A in the vehicle 1, to activate a subset of the preprogrammed control programmes in the memory 9, and more specifically the control programmes designed to receive signals from the sensors 6 connected to control unit A and to send control signals to the operating devices 6 connected to control unit A. This is achieved by connecting a particular combination of the connection pins 20, e.g. by connecting them to earth. The memory 9 can thus be programmed so that relevant tasks of control unit A can be performed by the connection pins 21 and 22 being connected to one another.

Parameters specific to the vehicle are stored in the programmable memory 10. They are contained in a parameter list which includes information on the number of control units and how the various parameters for the operating devices of the vehicle 1 have to be set. The parameter list thus contains all the specific information for each individual vehicle 1, i.e. the particular vehicle variant. It is possible, for example, that a certain function which exists in the vehicle 1 will not be used, that the vehicle 1 is equipped with a special extra function, etc. These vehicle-specific parameters are thus loaded into the programmable memory 10 of all the control units A-H. The various control programmes activated in the permanent memory 9 can then call up their respective parameters from the memory 10 via the processor 8. Each control unit A-H is also directed to making it possible to transmit said vehicle-specific parameters to another control unit A-H via the communication port 13. This can, for example, take place automatically when a new control unit is being fitted in the vehicle 1. This facilitates the replacement of a defective control unit in that a new one with no vehicle-specific parameters at all is fitted in the vehicle 1 and will then be automatically adapted to the latter by the arrangement according to the invention. In addition to the fact that this means that only one type of control unit is required for a large number of different vehicles, the risk of errors at the fitting stage is very substantially reduced.

Control units A-H are directed to operating according to the so-called multiplex principle, which means inter alia that a sensor signal received by a control unit (e.g. control unit A) can be transmitted via the transmission line 4 to another control unit (e.g. control unit B) in order to control an operating device 6 connected to the latter. An example which may be mentioned in this respect is that one of the sensors 6 of control unit A may take the form of a contact device arranged to be activated by a passenger who wants the bus to halt at the next stop, which involves a sensor signal being received by control unit A and passed on to the transmission line 4. The control unit (in this case control unit D) which is connected to the operating device 5 of the particular sensor 6 (i.e. an indicating lamp which directs the driver to halt at the next stop) receives and processes that sensor signal and emits a control signal, e.g. in the form of a voltage which lights up the indicating lamp. In more detail, the arrangement can operate so that a sensor signal received by control unit A is passed on by the processor 8 via the communication port 13 to the transmission line 4. All the other control units B-H detect the signal and it will be received and processed by the processor/processors 8 of the control unit/units B-H which operates/operate the particular operating device/devices 5. The processor 8 of any relevant control unit B-H will thus execute the control programme which is stored in its permanent memory 9. The electrical system of the vehicle 1 can be controlled by means of an external computer connected via the series channel device 11 of any of control units B-H. Such an external computer can also be used to supply new vehicle parameters or amend existing ones. Control units A-H all have the same status in the arrangement according to the invention, i.e. all the control units can receive and pass on sensor signals, all the control units can process sensor signals and all the control units can receive and transmit vehicle-specific information from another control unit or an external computer.

The present invention is not limited to the embodiments referred to above but may be varied and modified within the scope of the patent claims below. The embodiments referred to incorporate eight control units. It is of course clear that the arrangement according to the invention can also be used with fewer (e.g. only two) or with more control units. The activating or encoding device 19 referred to may in an alternative embodiment take the form of a setting device which at the time of fitting control units A-H is set by the fitter at a point corresponding to the location of the control unit in the vehicle 1.

## Claims

1. Arrangement for responding to signals from various sensors (6) and controlling various operating devices (5) in a vehicle (1), and incorporating at least two control units (A-H) which are each directed to being connected to a subset of said sensors (6) and a subset of said operating devices (5) and to receive signals from said subset of sensors and send control signals to said subset of operating devices, in which each control unit (A-H) incorporates elements essentially identical to those of each of the other control units, in which the control units (A-H) are designed in such a way as to be mutually interchangeable, in which each control unit (A-H) incorporates not only a memory device (9) with a number of control programmes which are designed to respond to the various sensors and to control the various operating devices (5) but also a means (19) which is directed to activating a subset of control programmes which is designed to receive signals from the subset of sensors (6) of the relevant control unit and to send control signals to the subset of operating devices (5) of that control unit, in which each control unit (A-H) incorporates said memory device (9) that contains a permanently programmed section in which said control programmes are preprogrammed, **characterised in that** each control unit (A-H) also incorporates a memory device (10) with a programmable memory section in which vehicle-specific parameters are stored, and **in that** each control unit (A-H) is directed to making it possible for said vehicle-specific parameters to be transmitted to another control unit, e.g. when the vehicle (1) is being fitted with a new control unit.

2. Arrangement according to claim 1, **characterised in that** said activating means (19) is directed to activating said subset of the control programmes at the time when the control units (A-H) are being fitted in the vehicle (1).

3. Arrangement according to any one of the foregoing claims, **characterised in that** said activating means (19) incorporates a set-up of code contacts (20) connected in such a way that activation of the relevant control programmes is by connection of a combination of these code contacts.

4. Arrangement according to claim 3, **characterised in that** each control unit (A-H) incorporates a connector (21) which contains said set-up of code contacts (20) and which is directed to being connected to a corresponding connector (22) in the vehicle (1), which connection is made by the connectors (21,22) being connected to one another.

5. Arrangement according to claim 4, **characterised in that** the connector (21) of each control unit (A-H) incorporates a number of connection contacts (16,18) for incoming signals from the sensors (6) and outgoing signals to the operating devices (5).

6. Arrangement according to any one of the foregoing claims, **characterised in that** a transmission line (4) connects the control units (A-H) to one another and is directed to transmitting signals between the control units.

7. Arrangement according to claim 6, **characterised in that** the control units (A-H) are arranged to make it possible to transmit a sensor signal received by a control unit from the latter to another control unit in order to control an operating device (5) which is connected to that other control unit.

8. Control unit (A-H) for responding to signals from various sensors (6) and controlling various operating devices (5) in a vehicle (1),
the unit is directed to being connected to a subset of said sensors (6) and a subset of said operating devices (5) and to receive signals from said subset of sensors and send control signals to said subset of operating devices,
the control unit (A-H) incorporates means (19) which is directed to activating a subset of control programmes which are designed to receive signals from said subset of sensors (6) and to send control signals to said subset of operating devices (5),
the unit (A-H) incorporates a memory device (9) that contains a permanently programmed section in which said control programmes are preprogrammed, **characterised in that** the control unit (A-H) also incorporates a memory device (10) with a programmable memory section in which vehicle-specific parameters are stored and
**in that** the control unit(A-H) is directed to making it possible for said vehicle-specific parameters to be transmitted to another control unit, e.g. when the vehicle (1) is being fitted with a new control unit.

9. Control unit according to claim 8, **characterised in that** said activating means (19) incorporates a set-up of code contacts (20) connected in such a way that activation of the control programmes concerned is by connection of a combination of these code contacts.

10. Control unit according to claim 9, **characterised in that** the connector (21) which incorporates said set-up of code contacts (20) is directed to being connected to a corresponding connector (22) in the vehicle, said connection being brought about by connecting the connectors (21,22) to one another.

11. Control unit according to claim 10, **characterised in that** the connector (21) incorporates a number of connection pins (16,18) for incoming signals from the sensors (6) and outgoing signals to the operating devices (5).

## Patentansprüche

1. Anordnung zum Ansprechen auf Signale von verschiedenen Sensoren (6) und zum Steuern verschiedener Betätigungsvorrichtungen (5) in einem Fahrzeug (1), umfassend wenigstens zwei Steuerungseinheiten (A-H),
von denen jede dazu vorgesehen ist, mit einer Teilmenge der Sensoren (6) und einer Teilmenge der Betätigungsvorrichtungen (5) verbunden zu sein und Signale von der Teilmenge der Sensoren zu empfangen und Steuerungssignale zu der Teilmenge der Betätigungsvorrichtungen zu senden,
wobei jede Steuerungseinheit (A-H) Elemente umfasst, die im Wesentlichen identisch zu jenen jeder der anderen Steuerungseinheiten sind,
wobei die Steuerungseinheiten (A-H) derart ausgebildet sind, dass sie gegeneinander austauschbar sind,
wobei jede Steuerungseinheit (A-H) nicht nur eine Speichervorrichtung (9) mit einer Mehrzahl von Steuerungsprogrammen umfasst, die dazu vorgesehen sind, auf die verschiedenen Sensoren anzusprechen und die verschiedenen Betätigungsvorrichtungen (5) zu steuern, sondern auch ein Mittel (19) umfasst, das dazu vorgesehen ist, eine Teilmenge von Steuerungsprogrammen zu aktivieren, welche dazu vorgesehen sind, Signale von der Teilmenge von Sensoren (6) der betreffenden Steuerungseinheit zu empfangen und Steuerungssignale zu der Teilmenge der Betätigungsvorrichtungen (5) jener Steuerungseinheit zu senden,
wobei jede Steuerungseinheit (A-H) die Speichervorrichtung (9) umfasst, welche einen permanent programmierten Bereich enthält, in dem die Steuerungsprogramme vorprogrammiert sind,
**dadurch gekennzeichnet, dass** jede Steuerungseinheit (A-H) auch eine Speichervorrichtung (10) mit einem programmierbaren Speicherbereich umfasst, in welchem fahrzeugspezifische Parameter gespeichert sind, und dass jede Steuerungseinheit (A-H) dazu vorgesehen ist, es zu ermöglichen, dass die fahrzeugspezifischen Parameter zu einer anderen Steuerungseinheit übertragen werden, beispielsweise dann, wenn das Fahrzeug (1) mit einer neuen Steuerungseinheit ausgerüstet wird.

2. Anordnung nach einem der vorhergehenden Ansprüche, **dadurch gekennzeichnet, dass** das Aktivierungsmittel (19) dazu vorgesehen ist, die Teilmenge der Steuerungsprogramme zu dem Zeitpunkt zu aktivieren, zu dem die Steuerungseinheiten (A-H) ins Fahrzeug (1) eingebaut werden.

3. Anordnung nach einem der vorhergehenden Ansprüche, **dadurch gekennzeichnet,**
**dass** das Aktivierungsmittel (19) einen Aufbau von Kodierungskontakten (20) umfasst, die so verbunden sind, dass die Aktivierung der betreffenden Steuerungsprogramme durch Verbindung einer Kombination dieser Kodierungskontakte erfolgt.

4. Anordnung nach Anspruch 3, **dadurch gekennzeichnet,**
**dass** jede Steuerungseinheit (A-H) einen Verbinder (21) umfasst, welcher einen Aufbau von Kodierungskontakten (20) beinhaltet und dazu vorgesehen ist, mit einem korrespondierenden Verbinder (22) in dem Fahrzeug (1) verbunden zu werden, dessen Verbindung durch die miteinander verbundenen Verbinder (21, 22) hergestellt ist.

5. Anordnung nach Anspruch 4, **dadurch gekennzeichnet,**
**dass** der Verbinder (21) einer jeden Steuerungseinheit (A-H) eine Anzahl von Verbindungskontakten. (16, 18) für Eingangssignale von den Sensoren (6) und Ausgangssignale zu den Betätigungsvorrichtungen (5) umfasst.

6. Anordnung nach einem der vorhergehenden Ansprüche, **dadurch gekennzeichnet,**
**dass** eine Übertragungsleitung (4) die Steuerungseinheiten (A-H) miteinander verbindet und dazu vorgesehen ist, Signale zwischen den Steuerungseinheiten zu übertragen.

7. Anordnung nach Anspruch 6, **dadurch gekennzeichnet,**
**dass** die Steuerungseinheiten (A-H) derart angeordnet sind, dass sie es ermöglichen, ein von einer Steuerungseinheit empfangenes Sensorsignal von dieser zu einer anderen Steuerungseinheit zu übertragen, um eine Betätigungsvorrichtung (5) zu steuern, welche mit der anderen Steuerungseinheit verbunden ist.

8. Steuerungseinheit (A-H) zum Ansprechen auf Signale von verschiedenen Sensoren (6) und zum Steuern verschiedener Betätigungsvorrichtungen (5) in einem Fahrzeug (1), wobei die Einheit dazu vorgesehen ist, mit einer Teilmenge der Sensoren (6) und einer Teilmenge der Betätigungsvorrichtungen (5) verbunden zu sein, und Signale von der Teilmenge der Sensoren zu empfangen und Steuerungssignale zu der Teilmenge der Betätigungsvorrichtungen zu senden,
wobei die Steuerungseinheit (A-H) ein Mittel (19) umfasst, welches dazu vorgesehen ist, eine Teilmenge von Steuerungsprogrammen zu aktivieren, die dazu vorgesehen sind, Signale von der Teilmenge der Sensoren (6) zu empfangen und Steuerungssignale zu der Teilmenge der Betätigungsvorrichtungen (5) zu senden,
wobei die Einheit (A-H) eine Speichervorrichtung (9) umfasst, welche einen permanent programmierten Bereich enthält, in dem die Steuerungsprogramme vorprogrammiert sind,
**dadurch gekennzeichnet, dass** die Steuerungseinheit (A-H) auch eine Speichervorrichtung (10) mit einem programmierbaren Speicherbereich umfasst, in welchem fahrzeugspezifische Parameter gespeichert sind,
und dass die Steuerungseinheit (A-H) dazu vorgesehen ist, es zu ermöglichen, dass die fahrzeugspezifischen Parameter zu einer anderen Steuerungseinheit übertragen werden, beispielsweise dann, wenn das Fahrzeug (1) mit einer neuen Steuerungseinheit ausgerüstet wird.

9. Steuerungseinheit nach Anspruch 8, **dadurch gekennzeichnet,**
**dass** das Aktivierungsmittel (19) einen Aufbau von Kodierungskontakten (20) umfasst, die so verbunden sind, dass die Aktivierung der betreffenden Steuerungsprogramme durch Verbindung einer Kombination dieser Kodierungskontakte erfolgt.

10. Steuerungseinheit nach Anspruch 9, **dadurch gekennzeichnet,**
**dass** der Verbinder (21), welcher den Aufbau von Kodierungsköntakten (20) umfasst, dazu vorgesehen ist, mit einem korrespondierenden Verbinder (22) in dem Fahrzeug (1) verbunden zu werden, wobei die Verbindung durch Verbinden der Verbinder (21, 22) bewerkstelligt wird.

11. Steuerungseinheit gemäß Anspruch 10, **dadurch gekennzeichnet,**
**dass** der Verbinder (21) eine Anzahl von Verbindungskontakten (16, 18) für Eingangssignale von den Sensoren (6) und Ausgangssignale zu den Betätigungsvorrichtungen (5) umfasst.

## Revendications

1. Système permettant de répondre à des signaux provenant de divers capteurs (6) et de commander divers dispositifs d'actionnement (5) sur un véhicule (1), et renfermant au moins deux unités de commande (A-H) qui sont chacune réglées pour être connectées à un sous-ensemble desdits capteurs (6) et à un sous-ensemble desdits dispositifs d'actionnement (5), et pour recevoir des signaux dudit sous-ensemble de capteurs et émettre des signaux de commande audit sous-ensemble de dispositifs d'actionnement, dans lequel chaque unité de commande (A-H) renferme des éléments essentiellement identiques à ceux de chacune des unités de commande, dans lequel les unités de commande (A-H) sont conçues de telle manière qu'elles peuvent être échangées entre elles, dans lequel chaque unité de commande (A-H) renferme non seulement un dispositif à mémoire (9) comportant un certain nombre de programmes de commande qui sont conçus pour répondre aux divers capteurs et pour commander les divers dispositifs d'actionnement (5), mais aussi des moyens (19) qui sont réglés pour activer un sous-ensemble de programmes de commande qui est conçu pour recevoir des signaux provenant du sous-ensemble de capteurs (6) de l'unité de commande adéquate et pour émettre des signaux de commande au sous-ensemble de dispositifs d'actionnement (5) de cette unité de commande, dans lequel chaque unité de commande (A-H) renferme ledit dispositif à mémoire (9) qui comporte une partie programmée de manière permanente dans laquelle lesdits programmes de commande sont préprogrammés,
**caractérisé en ce que** chaque unité de commande (A-H) renferme aussi un dispositif à mémoire (10) comportant une partie de mémoire programmable dans laquelle des paramètres spécifiques au véhicule sont mémorisés, et **en ce que** chaque unité de commande (A-H) est réglée pour permettre que lesdits paramètres spécifiques au véhicule soient transmis à une autre unité de commande, par exemple lorsque le véhicule (1) est équipé d'une nouvelle unité de commande.

2. Système selon l'une quelconque des revendications précédentes, **caractérisé en ce que** lesdits moyens d'activation (19) sont réglés pour activer ledit sous-ensemble des programmes de commande au moment où les unités de commande (A-H) sont installées sur le véhicule (1).

3. Système selon l'une quelconque des revendications précédentes, **caractérisé en ce que** lesdits moyens d'activation (19) renferment un dispositif de configuration des contacts à codes (20) connectés de telle manière que l'activation des programmes de commande adéquats se fait en connectant une combinaison de ces contacts à codes.

4. Système selon la revendication 3, **caractérisé en ce que** chaque unité de commande (A-H) renferme un connecteur (21) qui renferme ledit dispositif de configuration des contacts à codes (20) et qui est réglé pour être connecté à un connecteur correspondant (22) sur le véhicule (1), laquelle connexion est réalisée par les connecteurs (21, 22) connectés l'un à l'autre.

5. Système selon la revendication 4, **caractérisé en ce que** le connecteur (21) de chaque unité de commande (A-H) renferme un certain nombre de contacts de connexion (16, 18) permettant de recevoir des signaux des capteurs (6) et d'émettre des signaux vers les dispositifs d'actionnement (5).

6. Système selon l'une quelconque des revendications précédentes, **caractérisé en ce qu'**une ligne de transmission (4) connecte les unités de commande (A-H) les unes aux autres, et est réglée pour transmettre des signaux entre les unités de commande.

7. Système selon la revendication 6, **caractérisé en ce que** les unités de commande (A-H) sont agencées pour permettre la transmission d'un signal de capteur reçu par une unité de commande de celle-ci à une autre unité de commande afin de commander un dispositif d'actionnement (5) qui est connecté à cette autre unité de commande.

8. Unité de commande (A-H) permettant de répondre à des signaux provenant de divers capteurs (6) et de commander divers dispositifs d'actionnement (5) sur un véhicule (1), où l'unité est réglée pour être connectée à un sous-ensemble desdits capteurs (6) et à un sous-ensemble desdits dispositifs d'actionnement (5), et pour recevoir des signaux dudit sous-ensemble de capteurs et pour émettre des signaux de commande audit sous-ensemble de dispositifs d'actionnement,
où l'unité de commande (A-H) renferme des moyens (19) qui sont réglés pour activer un sous-ensemble de programmes de commande qui est conçu pour recevoir des signaux provenant dudit sous-ensemble de capteurs (6) et pour émettre des signaux de commande audit sous-ensemble de dispositifs d'actionnement (5),
où l'unité (A-H) renferme un dispositif à mémoire (9) qui comporte une partie programmée de manière permanente dans laquelle lesdits programmes de commande sont préprogrammés,
**caractérisée en ce que** l'unité de commande (A-H) renferme aussi un dispositif à mémoire (10) comportant une partie de mémoire programmable dans laquelle des paramètres spécifiques au véhicule sont mémorisés, et
**en ce que** l'unité de commande (A-H) est réglée pour permettre que lesdits paramètres spécifiques au véhicule soient transmis à une autre unité de commande, par exemple lorsque le véhicule (1) est équipé d'une nouvelle unité de commande.

9. Unité de commande selon la revendication 8, **caractérisée en ce que** lesdits moyens d'activation (19) renferment un dispositif de configuration des contacts à codes (20) connectés de telle manière que l'activation des programmes de commande concernés se fait par connexion d'une combinaison de ces contacts à codes.

10. Unité de commande selon la revendication 9, **caractérisée en ce que** le connecteur (21) qui renferme ledit dispositif de configuration des contacts à codes (20) est réglé pour être connecté à un connecteur correspondant (22) sur le véhicule (1), ladite connexion étant obtenue en connectant les connecteurs (21, 22) l'un à l'autre.

11. Unité de commande selon la revendication 10, **caractérisée en ce que** le connecteur (21) renferme un certain nombre de broches de connexion (16, 18) permettant de recevoir des signaux des capteurs (6) et d'émettre des signaux vers les dispositifs d'actionnement (5).
